# EUROPEAN PATENT APPLICATION

(11) **EP 4 786 946 A1**
(43) Date of publication of application: **05.08.2026**
(21) Application number: 25880939.1
(22) Date of filing: 27.08.2025
(51) Int. Cl.: G01M 13/027, F16H 25/22

(54) **TESTING DEVICE FOR BALL SCREW DEVICE**

(30) Priority: 12.12.2024 JP 2024218108
(71) Applicant: NSK Ltd., Tokyo 141-8560 (JP)
(72) Inventor: YOROZU, Yusuke, Fujisawa-shi, Kanagawa 251-8501 (JP); IWASE, Masanori, Fujisawa-shi, Kanagawa 251-8501 (JP)
(74) Representative: SSM Sandmair
(86) International application number: PCT/JP2025/030141
(87) International publication number: WO 2026/126583

(57) **Abstract**

A ball screw device testing apparatus includes a support that rotatably supports a rotation component of a ball screw device and linearly movably supports the other linear motion component, a first motor that generates a torque, and a load device that applies a load to the linear motion component. The load device includes a movable component that is disposed in a first direction with respect to the linear motion component and is movable in an axial direction and an orthogonal direction, a reaction force generation mechanism that is disposed in the first direction with respect to the movable component and presses the movable component from the first direction, and a radial load mechanism that moves the movable component in the orthogonal direction. The movable component is movable relative to the reaction force generation mechanism in the orthogonal direction. The movable component includes a coupling portion capable of transmitting a load in the second direction and the orthogonal direction to the linear motion component.

## Description

### Field

The present disclosure relates to a ball screw device testing apparatus.

### Background

A ball screw device is a device that converts a rotational motion into a linear motion and converts a linear motion into a rotational motion. In order to check the operation of the ball screw device and evaluate the efficiency thereof, a ball screw device testing apparatus has been conventionally used. An example of the ball screw device testing apparatus is a ball screw device testing apparatus disclosed in the following patent literature. Hereinafter, the ball screw device testing apparatus may be simply referred to as a testing apparatus.

The testing apparatus in the following Patent Literature includes an axial load mechanism that generates a load in an axial direction (hereinafter, referred to as an axial load) and a radial load mechanism that generates a load in a radial direction (hereinafter, referred to as a radial load). The axial load mechanism is disposed between the two nuts. The radial load mechanism includes a block disposed radially outside the axial load mechanism, a rail, a slider movable along the rail, and a spacer interposed between the block and the slider. In addition, by replacing the spacer with a spacer having a different thickness, the magnitude of the radial load is changed.

### Citation List

### Patent Literature

Patent Literature 1: JP 2004-020520 A

### Summary

### Technical Problem

The ball screw device is mounted on an electric brake device or the like that presses a brake pad. When pressing the brake pad, the electric brake device receives an axial load opposite to a direction in which the brake pad is pressed and a load in a direction in which the brake pad rotates. The load in the direction in which the brake pad rotates is converted into a radial load and transmitted to the ball screw device. In addition, the radial load transmitted to the ball screw device varies depending on the load pressing the brake pad and the rotational speed of the tire. As described above, the radial load acting on the ball screw device is not constant.

On the other hand, in the above testing apparatus, the spacer cannot be replaced during the test, and the magnitude of the radial load during the test is constant. Therefore, it is not possible to perform a test assuming an environment in which the magnitude of the radial load changes.

The present disclosure has been made in view of the above, and an object thereof is to provide a ball screw device testing apparatus capable of changing the magnitude of a radial load during a test.

### Solution to Problem

In order to achieve the above object, a ball screw device testing apparatus according to an aspect of the present disclosure includes: a support that rotatably supports a rotation component that is one of a screw shaft and a nut of a ball screw device and linearly movably supports a linear motion component that is the other of the screw shaft and the nut; a first motor that is configured to generate a torque for rotating the rotation component; and a load device that is configured to apply a load to the linear motion component. A direction parallel to a center axis of the screw shaft is defined as an axial direction. One direction in the axial direction is defined as a first direction, and the other direction in the axial direction is defined as a second direction. A direction orthogonal to the axial direction is defined as an orthogonal direction. The load device includes a movable component that is disposed in the first direction with respect to the linear motion component and is movable in the axial direction and the orthogonal direction, a reaction force generation mechanism that is disposed in the first direction with respect to the movable component and configured to press the movable component from the first direction, and a radial load mechanism that is configured to move the movable component in the orthogonal direction. The movable component is movable relative to the reaction force generation mechanism in the orthogonal direction. The movable component includes a coupling portion capable of transmitting a load in the second direction and the orthogonal direction to the linear motion component.

In the ball screw device testing apparatus of the present disclosure, when the linear motion component moves in the first direction, the movable component is pressed and moves in the first direction. On the other hand, the movable component receives a reaction force (load in the second direction) corresponding to the amount of movement in the first direction from the reaction force generation mechanism. Therefore, an axial load is applied to the linear motion component. The movable component is movable relative to the reaction force generation mechanism in the orthogonal direction. When the radial load mechanism moves the movable component in the orthogonal direction, a load (radial load) in the orthogonal direction is applied to the linear motion component. When the amount of movement in the orthogonal direction by the movable component increases, the radial load increases. As described above, according to the present disclosure, the magnitude of the radial load can be changed during the test.

In the ball screw device testing apparatus, the coupling portion may be formed of a same material as the movable component and is formed integrally with the movable component. Alternatively, the coupling portion may be a component separate from the movable component. Alternatively, the coupling portion may be fittable to the linear motion component.

Further, in the above-described ball screw device testing apparatus, the load device may include a housing and a guide mechanism, the housing has a through-hole penetrating the housing in the axial direction, into which the movable component is inserted, and movably supports the movable component in the axial direction, and the guide mechanism movably supports the housing in the orthogonal direction. The radial load mechanism may contact or be coupled to the housing in the orthogonal direction.

According to the above configuration, when the radial load mechanism moves the housing in the orthogonal direction, the movable component supported by the housing also moves in the orthogonal direction, and the radial load is applied to the linear motion component.

The ball screw device testing apparatus may include at least two or more of the guide mechanisms. The at least two or more of guide mechanisms may be disposed apart from each other in the axial direction.

The reaction force generation mechanism is a mechanism for applying a load (axial load) to the linear motion component in the second direction. However, when the movable component is moved in the orthogonal direction by the radial load mechanism, there is a possibility that the movable component tilts with the linear motion component as a fulcrum. When the movable component tilts, the load in the second direction acting on the linear motion component from the reaction force generation mechanism tilts, and the load in the radial direction is generated. As described above, a radial load is applied to the linear motion component by the reaction force generation mechanism, and the magnitude of the radial load may deviate from a predetermined value. On the other hand, according to the above configuration, the movable component is supported by two or more guide mechanisms disposed apart from each other in the axial direction, and hardly tilts. Therefore, the radial load acting on the linear motion component is only the radial load generated by the radial load mechanism, and the magnitude of the radial load can be set to a predetermined value.

In the ball screw device testing apparatus, the movable component may have a contact surface facing in the first direction. The reaction force generation mechanism may have a facing surface facing in the second direction and contacting the contact surface. One of the contact surface and the facing surface may be provided with a plurality of rolling elements for reducing friction between the contact surface and the facing surface.

Due to the reaction force of the reaction force generation mechanism, a large load in the axial direction acts between the contact surface and the facing surface. For this reason, the frictional force between the contact surface and the facing surface increases, and there is a possibility that the movement in the orthogonal direction by the movable component is not smoothly performed. On the other hand, according to the above configuration, the frictional force between the contact surface and the facing surface decreases. Therefore, the movement in the orthogonal direction by the movable component is smoothly performed. When the frictional force between the contact surface and the facing surface decreases, a load (radial load) in the second width direction is less likely to be transmitted from the movable component to the reaction force generation mechanism. Therefore, the radial load acting on the linear motion component is prevented from being smaller than a predetermined value.

In the ball screw device testing apparatus, one direction in the orthogonal direction may be defined as a first orthogonal direction. The other direction in the orthogonal direction may be defined as a second orthogonal direction. The ball screw device testing apparatus may include a biasing-portion support that is disposed in the second orthogonal direction with respect to the movable component and is movable in the orthogonal direction, a biasing portion that is disposed between the movable component and the biasing-portion support and exerts a biasing force in the orthogonal direction, and a movement device that is configured to move the biasing-portion support in the orthogonal direction. When the biasing-portion support moves in the first orthogonal direction and a length of the biasing portion in the orthogonal direction is smaller than a natural length, the biasing portion may exert a biasing force for biasing the movable component in the first orthogonal direction.

When the movement device directly presses the movable component in the first orthogonal direction, a radial load acting on the movable component increases, which may cause damage to the movable component or the like. On the other hand, according to the above configuration, since the movable component is pressed in the first orthogonal direction by the biasing force of the biasing portion, the radial load acting on the movable component is reduced. Therefore, breakage of the movable component or the like is avoided.

In the ball screw device testing apparatus, the movement device may include a radial motor, a radial side ball screw device configured to operate by a torque generated by the radial motor and move the biasing-portion support in the orthogonal direction.

According to the above configuration, when the radial motor is driven, the radial side ball screw device converts the rotational motion into the linear motion and moves the biasing-portion support. As a result, the length of the biasing portion changes, and the magnitude of the biasing force also changes.

### Advantageous Effects of Invention

According to the ball screw device testing apparatus of the present disclosure, the magnitude of the radial load can be changed during the test.

### Brief Description of Drawings

FIG. 1 is a schematic view of a ball screw device testing apparatus according to the first embodiment when viewed from above.
FIG. 2 is a schematic view of a reaction force generation mechanism, a movable component, a support, and an operation device of the first embodiment when viewed from a first width direction, and specifically, is a schematic view when viewed in a direction indicated by an arrow II in FIG. 1.
FIG. 3 is a schematic view of the movable component and the vicinity thereof according to the first embodiment when viewed from above.
FIG. 4 is a schematic view of the radial load mechanism and the movable component of the first embodiment when viewed in a second direction, and specifically, is a schematic view when viewed in a direction indicated by an arrow IV in FIG. 1.
FIG. 5 is a schematic view of a reaction force generation mechanism, a movable component, a support, and an operation device during a test when viewed from the first width direction in the first embodiment.
FIG. 6 is a schematic view of a radial load mechanism and a movable component during a test when viewed in the second direction in the first embodiment.
FIG. 7 is a schematic view of a reaction force generation mechanism, a movable component, a support, and an operation device when viewed from the first width direction in a ball screw device testing apparatus according to the second embodiment.
FIG. 8 is an enlarged schematic view of a jig device and the vicinity thereof of a ball screw device testing apparatus according to the third embodiment when viewed in a horizontal direction.

### Description of Embodiments

A mode for carrying out the present disclosure will be described in detail with reference to the drawings. The present disclosure is not limited by the content described in the following description. In addition, the constituent elements described below include those that can be easily assumed by those skilled in the art and those that are substantially the same. Furthermore, the constituent elements described below can be appropriately combined.

### (First Embodiment)

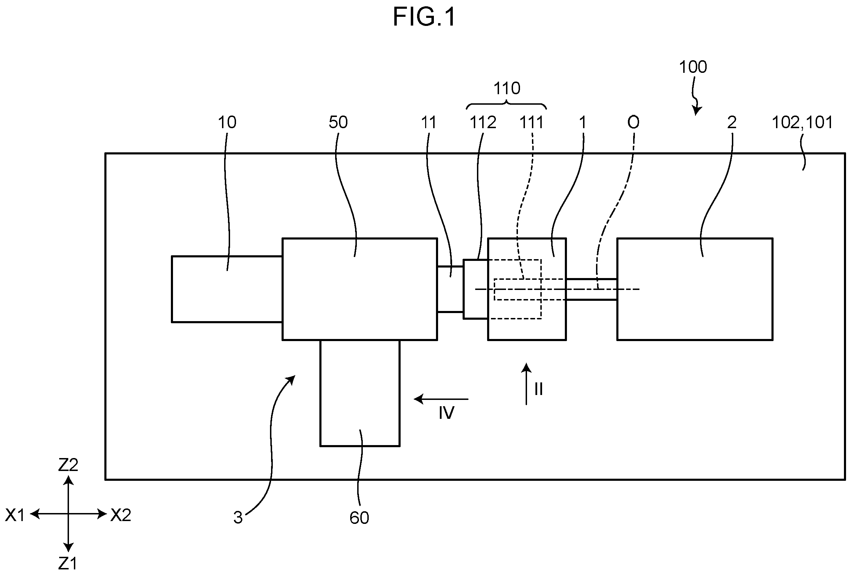

FIG. 1 is a schematic view of a ball screw device testing apparatus of the first embodiment when viewed from above. Before describing a ball screw device testing apparatus 100 of the first embodiment, a ball screw device 110 will be briefly described. As illustrated in FIG. 1, the ball screw device 110 includes a screw shaft 111, a nut 112 in which the screw shaft 111 is inserted, and a plurality of balls (not illustrated) disposed between the screw shaft 111 and the nut 112. Hereinafter, a direction parallel to a center axis O of the screw shaft 111 is referred to as an axial direction.

In the ball screw device 110, a torque is transmitted to one of the screw shaft 111 and the nut 112, and the one (hereinafter, referred to as a rotation component in some cases) rotates. The other (hereinafter, referred to as a linear motion component in some cases) of the screw shaft 111 and the nut 112 moves linearly (hereinafter, referred to as a linear motion in some cases) in the axial direction. In the ball screw device testing apparatus 100 of the first embodiment, the screw shaft 111 corresponds to a rotation component, and the nut 112 corresponds to a linear motion component.

Next, the ball screw device testing apparatus 100 will be described. In the following description, the ball screw device testing apparatus 100 to which the ball screw device 110 to be tested is already attached will be described as an example.

As illustrated in FIG. 1, a ball screw device testing apparatus 100 of the first embodiment includes a base 101, a support 1 that supports the ball screw device 110 to be tested, an operation device 2 that operates the ball screw device 110, and a load device 3 that applies a load to the ball screw device 110. The load device 3 includes a movable component 50, a reaction force generation mechanism 10, and a radial load mechanism 60.

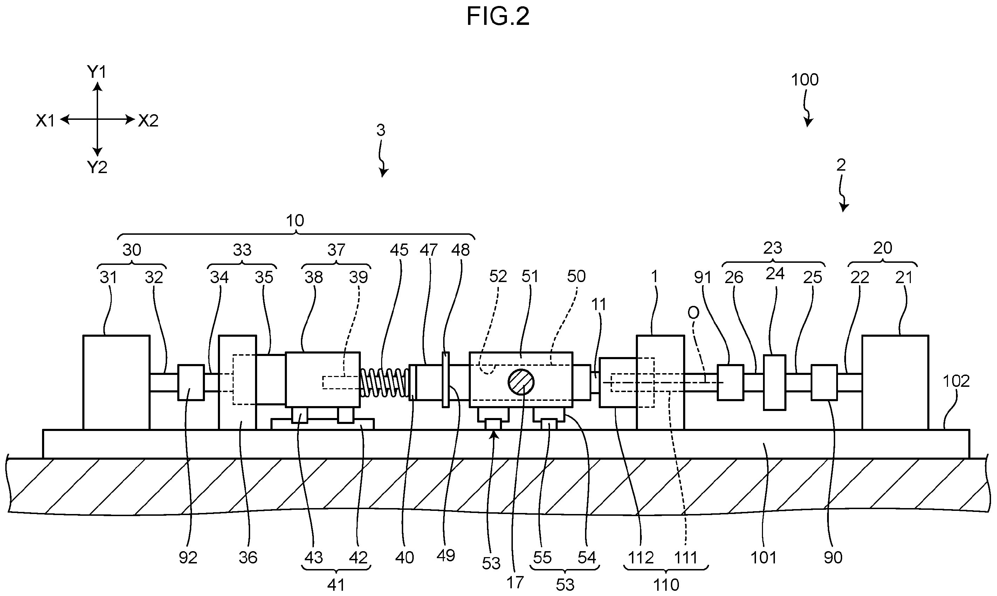

FIG. 2 is a schematic view of the reaction force generation mechanism, the movable component, the support, and the operation device according to the first embodiment when viewed from a first width direction, and specifically, is a schematic view when viewed in a direction indicated by an arrow II in FIG. 1. As illustrated in FIG. 2, the base 101 of the present embodiment extends in the horizontal direction. An installation surface 102 of the base 101 faces in an upper direction Y1 of the vertical direction. Therefore, in the following description, a direction in which the installation surface 102 of the base 101 faces will be referred to as the upper direction Y1, and a direction opposite to the direction in which the installation surface 102 faces will be referred to as a lower direction Y2.

In the present embodiment, the base 101 is horizontal, but in the present disclosure, the base 101 may be inclined with respect to the horizontal direction, or a normal to the base 101 may extend in the horizontal direction, and the direction of the base 101 is not particularly limited.

The support 1 rotatably supports the screw shaft 111, and movably supports the nut 112 in the axial direction. The support 1 supports the ball screw device 110 so that the center axis O of the screw shaft 111 is horizontal.

The movable component 50 is disposed on one side of the support 1 (screw shaft 111) in the axial direction, and the operation device 2 is disposed on the other side of the support 1 (screw shaft 111) in the axial direction. Hereinafter, in the axial direction, a direction from the support 1 to the movable component 50 is referred to as a first direction X1, and a direction from the support 1 to the operation device 2 is referred to as a second direction X2. In the horizontal direction, a direction orthogonal to the axial direction is referred to as a width direction.

As illustrated in FIG. 1, the radial load mechanism 60 is disposed on one side in the width direction with respect to the movable component 50. Hereinafter, in the width direction, a direction from the movable component 50 to the radial load mechanism 60 is referred to as a first width direction Z1, and a direction opposite to the first width direction Z1 is referred to as a second width direction Z2. In the present embodiment, since the width direction is orthogonal to the axial direction, it may be referred to as an orthogonal direction.

As illustrated in FIG. 2, the operation device 2 includes a first motor 20 and a torque sensor 23 disposed in this order from the second direction X2. The first motor 20 generates a torque for operating the ball screw device 110. The first motor 20 includes a main body 21 and an output shaft 22.

The torque sensor 23 is disposed between the support 1 (ball screw device 110) and the first motor 20 and measures a torque transmitted to the ball screw device 110. The torque sensor 23 includes a main body 24, a first shaft 25 extending from the main body 24 in the second direction X2, and a second shaft 26 extending from the main body 24 in the first direction X1.

The output shaft 22 and the first shaft 25 are coupled by a coupling 90. The second shaft 26 and the screw shaft 111 are coupled by a coupling 91.

As described above, when the first motor 20 is driven, the torque is transmitted to the screw shaft 111 via the torque sensor 23. Then, the screw shaft 111 rotates, and the nut 112 moves in the axial direction.

The reaction force generation mechanism 10 is disposed in the first direction X1 with respect to the movable component 50. When the movable component 50 moves in the first direction X1, the reaction force generation mechanism 10 presses the movable component 50 in the second direction X2 to apply a reaction force to the movable component 50. The reaction force generation mechanism 10 can apply an axial load to the nut 112 moving in the first direction X1 during the test of the ball screw device 110. The reaction force generation mechanism 10 of the present embodiment includes an axial motor 30, a first load-side ball screw device 33, a first biasing-portion support 37, a first biasing portion 45, a load cell 47, and a pressing portion 48, which are disposed in this order from the first direction X1.

The axial motor 30 generates power for adjusting the length of the first biasing portion 45 in the axial direction. The axial motor 30 includes a main body 31 and an output shaft 32.

The first load-side ball screw device 33 converts the rotational motion generated by the axial motor 30 into the linear motion. The first load-side ball screw device 33 includes a screw shaft 34, a nut 35, and a plurality of balls (not illustrated). The base 101 is provided with a first load-side support 36 that supports the first load-side ball screw device 33. The first load-side support 36 rotatably supports the screw shaft 34 and movably supports the nut 35 in the axial direction. The screw shaft 34 is coupled to the output shaft 32 of the axial motor 30 by a coupling 92.

The first biasing-portion support 37 includes a main body 38 and a rod 39 movably supported by the main body 38 in the axial direction. The rod 39 extends from the main body 38 in the second direction X2. A flange 40 is provided at an end of the rod 39 in the second direction X2.

The first biasing portion 45 is a component that exerts a biasing force. The first biasing portion 45 is disposed between the end surface of the main body 38 in the second direction X2 and the flange 40, and biases the flange 40 in the second direction X2. Specific examples of the first biasing portion 45 include a coil spring and a disk spring. When the disk spring is used, a plurality of disk springs may be disposed in the axial direction.

The main body 38 of the present embodiment is movably supported in the axial direction by a linear guide 41 fixed to the base 101. The linear guide 41 includes a rail 42 extending in the axial direction and a slider 43 movable in the axial direction along the rail 42. The nut 35 of the first load-side ball screw device 33 is coupled to an end portion of the main body 38 in the first direction X1. In the present disclosure, the nut 35 may rotate, and the screw shaft 34 may move in the axial direction.

The load cell 47 measures the load in the axial direction. The load cell 47 is fixed to the second direction X2 side of the flange 40 of the first biasing-portion support 37.

The pressing portion 48 is attached to the second direction X2 side of the load cell 47. The surface of the pressing portion 48 facing in the second direction X2 is a facing surface 49. The facing surface 49 is a flat surface extending in the vertical direction and the width direction. The facing surface 49 contacts the movable component 50 from the first direction X1.

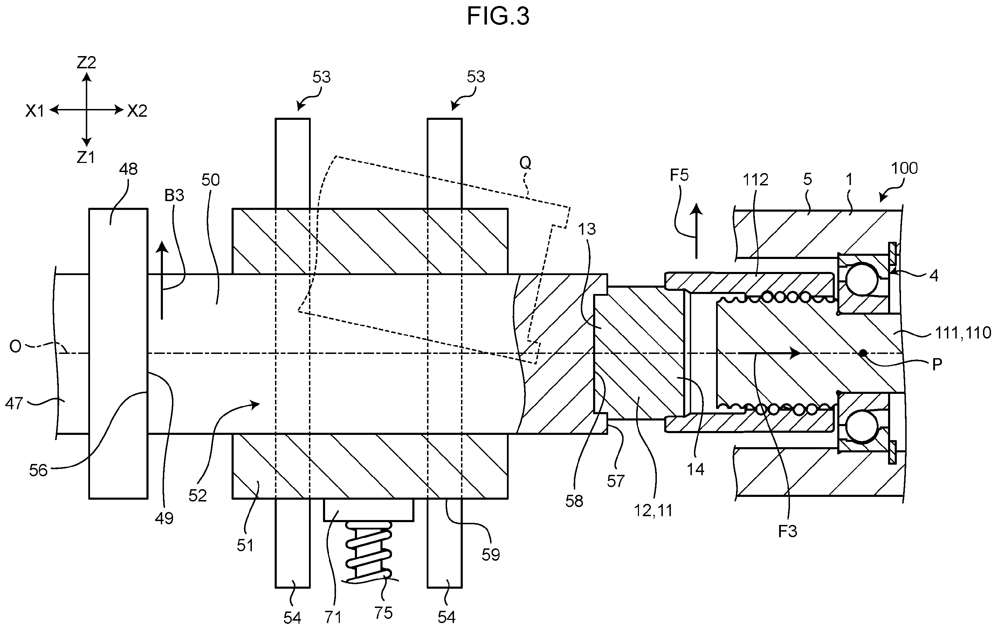

FIG. 3 is a schematic view of the movable component and the vicinity thereof according to the first embodiment when viewed from above. As illustrated in FIG. 3, the movable component 50 is a shaft-like component extending in the axial direction. The movable component 50 is supported by a housing 51. The housing 51 is a cylindrical component in which a through-hole 52 penetrating in the axial direction is formed. The movable component 50 is inserted into the through-hole 52. The movable component 50 is movably supported by the housing 51 in the axial direction.

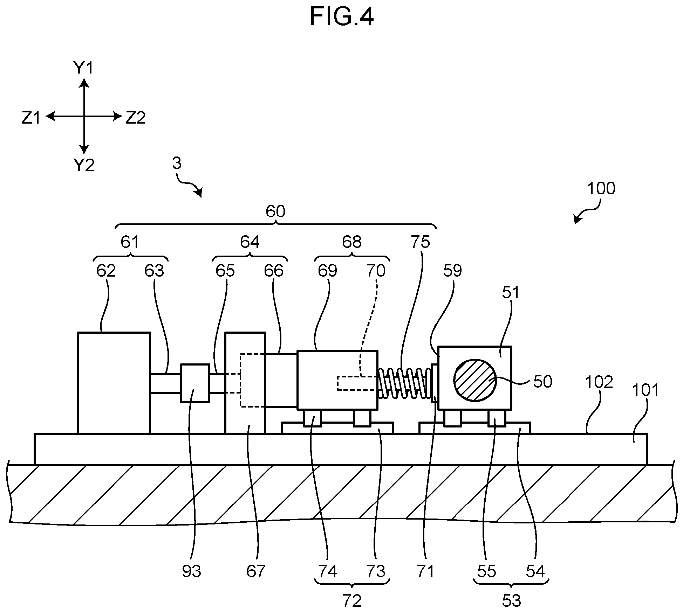

The housing 51 is supported by a linear guide (guide mechanism) 53 installed on the base 101. The linear guide 53 includes a rail 54 extending in the width direction and a slider 55 (see FIGS. 2 and 4) movable in the axial direction along the rail 54. Therefore, the housing 51 is movably supported by the base 101 in the width direction. That is, the movable component 50 can move in the width direction together with the housing 51.

In the present embodiment, two linear guides 53 are provided. The two linear guides 53 are axially spaced apart from each other. Therefore, tilting of the housing 51 (movable component 50) is avoided. Although the number of linear guides 53 of the present embodiment is two, the number of linear guides 53 in the present disclosure may be three or more. According to this, the housing 51 (movable component 50) is more reliably prevented from being tilted. Alternatively, in the present disclosure, the number of the linear guides 53 may be one.

The movable component 50 is longer in the axial direction than the housing 51. Therefore, both ends of the movable component 50 protrude from the housing 51 in the axial direction. An end surface of the movable component 50 in the first direction X1 is a contact surface 56. The contact surface 56 is a flat surface extending in the vertical direction and the width direction. The contact surface 56 is in contact with the facing surface 49 of the pressing portion 48. That is, the movable component 50 is not coupled to the pressing portion 48. Therefore, the movable component 50 is movable relative to the pressing portion 48 (reaction force generation mechanism 10) in the width direction (orthogonal direction).

The size of the facing surface 49 in the width direction is larger than the size of the contact surface 56 in the width direction. Therefore, even when the movable component 50 moves in the width direction, the contact surface 56 contacts the facing surface 49.

The movable component 50 includes a coupling portion 11 in order to transmit a load in the second direction X2 and the width direction (orthogonal direction) to the nut 112 serving as a rotation component. In the present embodiment, the coupling portion 11 is a component separate from the movable component 50 and can be separated from the movable component 50.

The coupling portion 11 couples the movable component 50 and the nut 112 (rotation component). The coupling portion 11 of the present embodiment includes a coupling-portion main body 12, a first fitting portion 13 protruding in the first direction X1 from the coupling-portion main body 12, and a second fitting portion 14 protruding in the second direction X2 from the coupling-portion main body 12.

A second end surface 57 of the movable component 50 in the second direction X2 has a recess 58 recessed in the first direction. The first fitting portion 13 is fitted into the recess 58 of the movable component 50. The second fitting portion 14 is fitted into the inner periphery of the nut 112. Thus, the coupling portion 11 is detachably attached to each of the movable component 50 and the nut 112. When the coupling portion 11 (movable component 50) moves in the width direction, the outer peripheral surface of the second fitting portion 14 presses the inner peripheral surface of the nut 112 in the width direction. Therefore, the coupling portion 11 can transmit a load in the width direction to the nut 112. An end surface of the coupling-portion main body 12 facing in the second direction X2 is in contact with an end surface of the nut 112. Therefore, the coupling portion 11 can transmit the load in the second direction X2 to the nut 112.

The first fitting portion 13 may be clearance-fitted into the recess 58 or may be interference-fitted thereinto. Similarly, the second fitting portion 14 may be clearance-fitted into the nut 112 or may be interference-fitted thereinto. During the test, the coupling portion 11 receives a load in the first direction X1 from the nut 112. The coupling portion 11 receives a load (load in the second direction X2) from the reaction force generation mechanism 10. Therefore, even when the first fitting portion 13 is clearance-fitted into the recess 58 or the second fitting portion 14 is clearance-fitted into the nut 112, the coupling portion 11 does not fall off from the movable component 50 or the nut 112.

As illustrated in FIG. 3, the support 1 of the present embodiment includes a bearing 4 that rotatably supports the screw shaft 111. In addition, the support 1 includes a cylindrical portion 5 disposed radially outside the nut 112. The cylindrical portion 5 has a groove (not illustrated) extending in the axial direction. A rotation stopper (not illustrated) that enters the groove is provided on the outer peripheral surface of the nut 112. Therefore, the nut 112 is supported by the support 1 so as to be non-rotatable and movable in the axial direction.

FIG. 4 is a schematic view of the radial load mechanism and the movable component of the first embodiment when viewed in the second direction, and specifically, is a schematic view when viewed in a direction indicated by an arrow IV in FIG. 1. The radial load mechanism 60 is a mechanism for moving the movable component 50 in the width direction. The radial load mechanism 60 can apply a radial load to the nut 112. As illustrated in FIG. 4, the radial load mechanism 60 includes a radial motor 61, a second load-side ball screw device 64, a second biasing-portion support 68, and a second biasing portion 75, which are disposed in this order from the first width direction Z1.

The radial motor 61 generates power for adjusting the length of the second biasing portion 75. The radial motor 61 includes a main body 62 and an output shaft 63.

The second load-side ball screw device 64 converts the rotational motion generated by the radial motor 61 into the linear motion. The second load-side ball screw device 64 includes a screw shaft 65, a nut 66, and a plurality of balls (not illustrated). The base 101 is provided with a second load-side support 67 that supports the second load-side ball screw device 64. The second load-side support 67 rotatably supports the screw shaft 65 and movably supports the nut 66 in the axial direction. The screw shaft 65 is coupled to the output shaft 63 of the radial motor 61 by a coupling 93. In the present disclosure, the nut 66 may rotate, and the screw shaft 65 may move in the axial direction.

The second biasing-portion support 68 includes a main body 69 and a rod 70 movably supported in the width direction by the main body 69. The rod 70 extends from the main body 69 in the second width direction Z2.

A flange 71 is provided at an end of the rod 70 in the second width direction Z2. The flange 71 is in contact with a side surface 59 of the housing 51 in the first width direction Z1. The flange 71 is coupled to the side surface 59. That is, the flange 71 is coupled to the side surface 59 of the housing 51 in the first width direction Z1. The rod 70 (flange 71) and the housing 51 are integrated.

The second biasing portion 75 is a component that exerts a biasing force. The second biasing portion 75 is disposed between the end surface of the main body 69 in the second width direction Z2 and the flange 71, and biases the flange 71 in the second width direction Z2. Specific examples of the second biasing portion 75 include a coil spring and a disk spring. When the disk spring is used, a plurality of disk springs may be disposed in the axial direction.

The main body 69 of the present embodiment is movably supported in the axial direction by a linear guide 72 fixed to the base 101. The linear guide 72 includes a rail 73 extending in the axial direction and a slider 74 movable in the axial direction along the rail 73. The nut 66 of the second load-side ball screw device 64 is coupled to an end portion of the main body 69 in the first width direction Z1.

Next, a method of using the ball screw device testing apparatus 100 will be described.

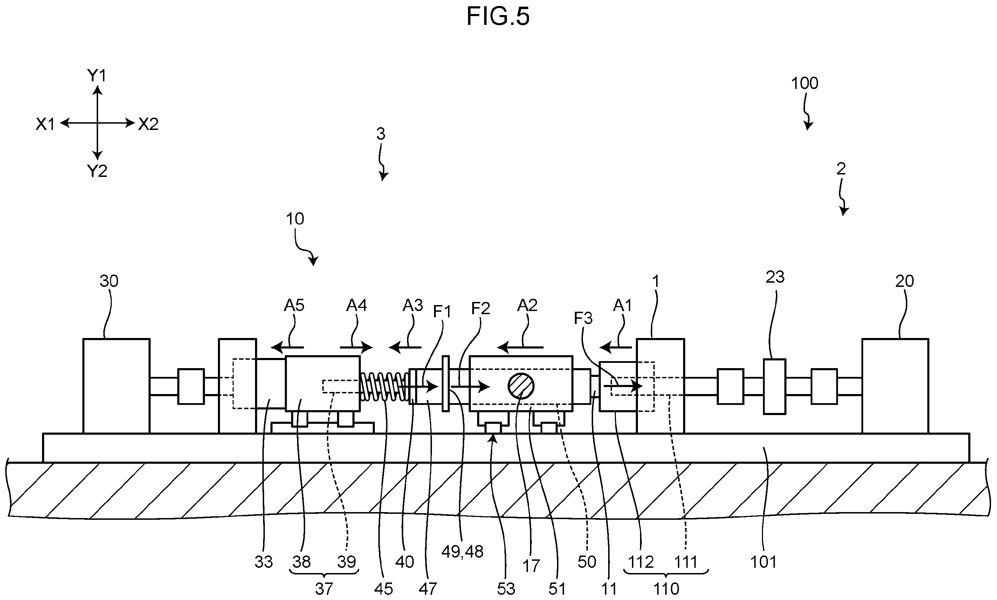

FIG. 5 is a schematic view of the reaction force generation mechanism, the movable component, the support, and the operation device during a test when viewed from the first width direction in the first embodiment. In the present description, in the state before the start of the test, as illustrated in FIG. 5, the movable component 50 (coupling portion 11) and the linear motion component (nut 112) are already in contact with each other. The length of the first biasing portion 45 in the axial direction is a natural length, and the first biasing portion 45 does not exert the biasing force (see an arrow F1 in FIG. 5). Therefore, an axial load (see an arrow F3 in FIG. 5) is not applied to the nut 112.

In the radial load mechanism 60 in the state before the start of the test, the length of the second biasing portion 75 is a natural length, and the second biasing portion 75 does not exert the biasing force. That is, the radial load mechanism 60 does not press the movable component 50 in the second width direction Z2. For this reason, no radial load is applied to the nut 112.

As illustrated in FIG. 5, in the test, the first motor 20 is driven to move the nut 112 in the first direction X1 (see an arrow A1 in FIG. 5). When the nut 112 moves, the movable component 50 is pressed and moves in the first direction X1 (see an arrow A2 in FIG. 5). Further, the pressing portion 48 is pressed in the first direction X1 by the movable component 50, and the flange 40 moves in the first direction X1 (see an arrow A3 in FIG. 5).

As a result, the length of the first biasing portion in the axial direction 45 decreases. That is, the first biasing portion 45 exerts the biasing force (see an arrow F1 in FIG. 5) that urges the flange 40 in the second direction X2. Accordingly, the pressing portion 48 presses the movable component 50 in the second direction X2 (see an arrow F2 in FIG. 5). Then, the movable component 50 presses the nut 112 in the second direction X2. From the above, the nut 112 moves in the first direction X1 while receiving the axial load (see the arrow F3 in FIG. 5).

When the amount of movement in the first direction X1 by the nut 112 increases, the length of the first biasing portion 45 in the axial direction further decreases. That is, the biasing force (see the arrow F1 in FIG. 5) of the first biasing portion 45 that biases the flange 40 in the second direction X2 increases. Therefore, the load (see the arrow F2 in FIG. 5) of the pressing portion 48 that presses the movable component 50 in the second direction X2 also increases, and the axial load (see the arrow F3 in FIG. 5) acting on the nut 112 also increases. From the above, as the amount of movement of the nut 112 in the first direction X1 increases, the axial load (see the arrow F3 in FIG. 5) acting from the reaction force generation mechanism 10 increases.

During the test, the torque sensor 23 measures the torque transmitted to the screw shaft 111 of the ball screw device 110. The load cell 47 measures the load acting on the movable component 50 in the axial direction. Then, the efficiency of the ball screw device 110 is calculated from the data measured by the torque sensor 23 and the load cell 47. Thus, the characteristics of the ball screw device 110 can be evaluated.

Further, when the axial motor 30 is driven during the test, the main body 38 of the first biasing-portion support 37 moves in the axial direction. When the main body 38 moves in the second direction X2 (see the arrow A4 in FIG. 5), the length of the first biasing portion 45 in the axial direction decreases, and the biasing force of the first biasing portion 45 increases. On the other hand, when the main body 38 moves in the first direction X1 (see the arrow A5 in FIG. 5), the length of the first biasing portion 45 in the axial direction increases, and the biasing force of the first biasing portion 45 decreases. From the above, according to the present embodiment, the magnitude of the reaction force generated by the reaction force generation mechanism 10 is changed during the test. That is, the magnitude of the axial load (see arrow F3 in FIG. 5) acting on the nut 112 can be changed.

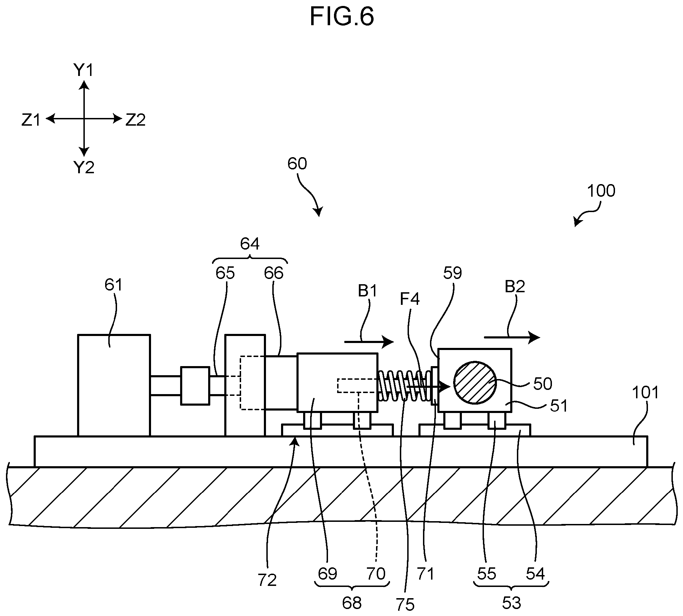

FIG. 6 is a schematic view of the radial load mechanism and the movable component during a test when viewed in the second direction in the first embodiment. As illustrated in FIG. 6, when a radial load is applied to the nut 112, the radial motor 61 of the radial load mechanism 60 is driven to move the main body 69 of the second biasing-portion support 68 in the second width direction Z2 (see an arrow B1 in FIG. 6). As a result, the length of the second biasing portion 75 decreases. That is, the second biasing portion 75 urges the flange 71 in the second width direction Z2 (see arrow F4 in FIG. 6). Therefore, the housing 51 and the movable component 50 move in the second width direction Z2 (see an arrow B2 in FIG. 6).

Here, the movable component 50 is movable relative to the pressing portion 48 (reaction force generation mechanism 10) in the width direction (orthogonal direction). Therefore, as illustrated in FIG. 3, the contact surface 56 of the movable component 50 slides with respect to the facing surface 49 of the pressing portion 48 (see an arrow B3 in FIG. 3). On the other hand, the second fitting portion 14 of the coupling portion 11 is caught on the inner peripheral surface of the nut 112, and presses the nut 112 in the second width direction Z2. As a result, a radial load (see an arrow F5 in FIG. 3) acts on the nut 112.

When the amount of movement of the main body 69 in the second width direction Z2 increases, the amount of movement of the movable component 50 in the second width direction Z2 (see the arrow F4 in FIG. 6) increases, and the radial load applied to the nut 112 (see the arrow F5 in FIG. 3) increases.

From the above, the ball screw device testing apparatus 100 of the first embodiment is capable of applying and not applying a radial load to the nut 112. The magnitude of the radial load can also be changed. Further, the radial load mechanism 60 that generates a radial load is a mechanism independent of the reaction force generation mechanism 10 that generates an axial load (see an arrow F3 in FIG. 3). Therefore, the magnitude of the radial load can be set regardless of the magnitude of the axial load.

Although the first embodiment is described above, the present disclosure is not limited to the above example. For example, a speed reducer may be further provided to increase the torque of the first motor 20, the axial motor 30, and the radial motor 61. The ball screw device testing apparatus 100 may not include the torque sensor 23 or the load cell 47 as long as a test for checking an operation such as whether abnormal noise or the like occurs or a test for evaluating durability, not a test for efficiency, is conducted. In order to measure the temperature of the ball screw device 110 during a test, a temperature sensor or the like may be further added to the ball screw device testing apparatus 100. The operation device 2 is disposed in the second direction X2 with respect to the support 1, but may be disposed in the width direction Z to transmit a torque to the screw shaft 111 by a pulley or the like. In this manner, the configuration of the ball screw device testing apparatus 100 may be changed as necessary. Although the reaction force generation mechanism 10 of the first embodiment includes the pressing portion 48, the present disclosure may not include the pressing portion 48.

The reaction force generation mechanism 10 of the first embodiment includes the axial motor 30 and the first load-side ball screw device 33 as the movement devices that move the main body 38 of the first biasing-portion support 37 in the axial direction, but in the present disclosure, a hydraulic actuator or an air actuator may be used instead of the axial motor 30 and the first load-side ball screw device 33.

Similarly, in the present embodiment, the radial motor 61 and the second load-side ball screw device 64 are provided as the movement devices that move the main body 69 of the radial load mechanism 60 in the width direction, but in the present disclosure, a hydraulic actuator or an air actuator may be used instead of the radial motor 61 and the second load-side ball screw device 64.

Further, in the present embodiment, the movable component 50 is pressed in the second width direction Z2 by the biasing force of the second biasing portion 75, but may be moved in the width direction by a movement device (the radial motor 61 and the second load-side ball screw device 64, or a hydraulic actuator, an air actuator, or the like) without using the second biasing portion 75. When the movable component 50 is directly moved by the movement device, a load acting on the movable component 50 increases, and there is a possibility that the movable component 50 and the like are damaged. Therefore, when the second biasing portion 75 is used as in the present embodiment, the load acting on the movable component 50 can be reduced, and the damage of the movable component 50 and the like is avoided.

In the embodiment, in the description of the method of using the ball screw device testing apparatus 100, an example is described in which the length of the first biasing portion 45 in the axial direction is a natural length at the start of the test, but in the present disclosure, at the start of the test, the length of the first biasing portion 45 in the axial direction may be smaller than the natural length, and an axial load (see an arrow F3 in FIG. 5) may be applied to the nut 112.

In addition, in the present disclosure, regarding the state before the start of the test, the movable component 50 (coupling portion 11) and the linear motion component (nut 112) may not be in contact with each other. That is, the test may be started in a state where there is a gap in the axial direction between the movable component 50 (coupling portion 11) and the linear motion component (nut 112). According to this, after the test is started and the linear motion component (nut 112) moves to some extent in the first direction X1, the linear motion component (nut 112) comes into contact with the movable component 50 (coupling portion 11) and receives a load. Regarding the gap in the axial direction, in the present disclosure, the test may be started in a state where there is a gap in the axial direction between the movable component 50 (coupling portion 11) and the pressing portion 48. The test may be started in a state where there is an axial gap between the movable component 50 (coupling portion 11) and the pressing portion 48 and there is an axial gap between the movable component 50 (coupling portion 11) and the linear motion component (nut 112). The gap in the axial direction is not limited to the gaps described above, and may be a gap at another connection location.

The second fitting portion 14 of the coupling portion 11 has a columnar shape in the present embodiment, but in the present disclosure, the second fitting portion 14 may have a hemispherical shape that can be inserted into the nut 112, and the shape of the second fitting portion 14 is not particularly limited. The second fitting portion 14 of the embodiment is fitted into the inner periphery of the nut 112, but in the present disclosure, the second fitting portion 14 may be fitted to the outer periphery of the nut 112.

The coupling portion 11 of the embodiment is coupled to the linear motion component (nut 112) by fitting, but in the present disclosure, the method of coupling to the linear motion component is not limited thereto. That is, the coupling portion 11 may not include the second fitting portion 14. For example, the coupling portion and the linear motion component may be coupled by being tightened by a fastener such as a bolt and a nut. Alternatively, the coupling portion may sandwich the linear motion component between both sides in the width direction. That is, in the present disclosure, the shape is not particularly limited as long as the coupling portion 11 can transmit the load in the second direction X2 and the width direction to the linear motion component.

Furthermore, in the present disclosure, the first fitting portion 13 of the coupling portion 11 may be a first fitting portion 13 fitted to the outer periphery of the movable component 50. While the coupling portion 11 is coupled to the movable component 50 by fitting, the coupling portion 11 may be coupled by a method other than fitting. The coupling portion 11 of the present embodiment is a separate component from the movable component 50, but in the present disclosure, the coupling portion 11 may be a coupling portion formed of the same material as the movable component 50 and formed integrally with the movable component 50 (inseparable). As described above, the shape and the like of the coupling portion 11 are not particularly limited in the present disclosure.

In the embodiment, the facing surface 49 of the pressing portion 48 and the contact surface 56 of the movable component 50 simply contact each other, but in the present disclosure, a rolling element may be disposed between the facing surface 49 and the contact surface 56. Examples of the rolling element include a ball, a cylindrical roller, and a needle. Accordingly, the frictional force between the facing surface 49 and the contact surface 56 decreases, and the movable component 50 smoothly moves in the width direction. When the frictional force between the facing surface 49 and the contact surface 56 decreases, a load (radial load) in the second width direction Z2 is less likely to be transmitted from the movable component 50 to the pressing portion 48. Therefore, the radial load acting on the nut 112 is prevented from being smaller than a predetermined value. In order to reduce the frictional force, in the present disclosure, lubricating oil may be applied to the facing surface 49 or the contact surface 56 in addition to interposing the rolling element.

As illustrated in FIG. 3, the bearing 4 supporting the ball screw device 110 has a gap between the outer ring and the ball and a gap between the ball and the inner ring. Therefore, there is a possibility that the entire ball screw device 110 tilts due to a radial load during the test. The fulcrum P (see FIG. 3) when the ball screw device 110 tilts is the center of the bearing 4 of the support 1. In addition, the ball screw device 110 has a gap between the nut 112 and the ball and a gap between the ball and the screw shaft 111, and there is a possibility that the nut 112 tilts with respect to the screw shaft 111.

As described above, when the frictional force between the facing surface 49 and the contact surface 56 is small due to the rolling element and/or the lubricating oil, and the entire ball screw device 110 or only the nut 112 tilts, there is a possibility that the movable component 50 coupled therewith via the coupling portion 11 tilts. A broken line Q in FIG. 3 indicates a position when the movable component 50 tilts. When the movable component 50 tilts, the load in the second direction X2 generated by the reaction force generation mechanism 10 tilts, and the load in the second width direction Z2 is generated. As a result, a load in the radial direction other than the radial load generated by the radial load mechanism 60 is generated, and there is a possibility that the magnitude of the radial load acting on the nut 112 cannot be set to a predetermined value.

However, in the movable component 50 of the present embodiment, the housing 51 is supported by the two linear guides 53, and thus the movable component 50 and the housing 51 hardly tilt. Therefore, the load acting on the nut 112 in the radial direction is only the radial load generated by the radial load mechanism 60, and the magnitude of the radial load acting on the nut 112 can be set to a predetermined value.

In addition, in the reaction force generation mechanism 10 of the above-described embodiment, the main body 38 of the first biasing-portion support 37 moves in the axial direction, but the main body 38 may be fixed in the present disclosure. Hereinafter, the second embodiment in which the main body 38 is fixed will be described.

### (Second Embodiment)

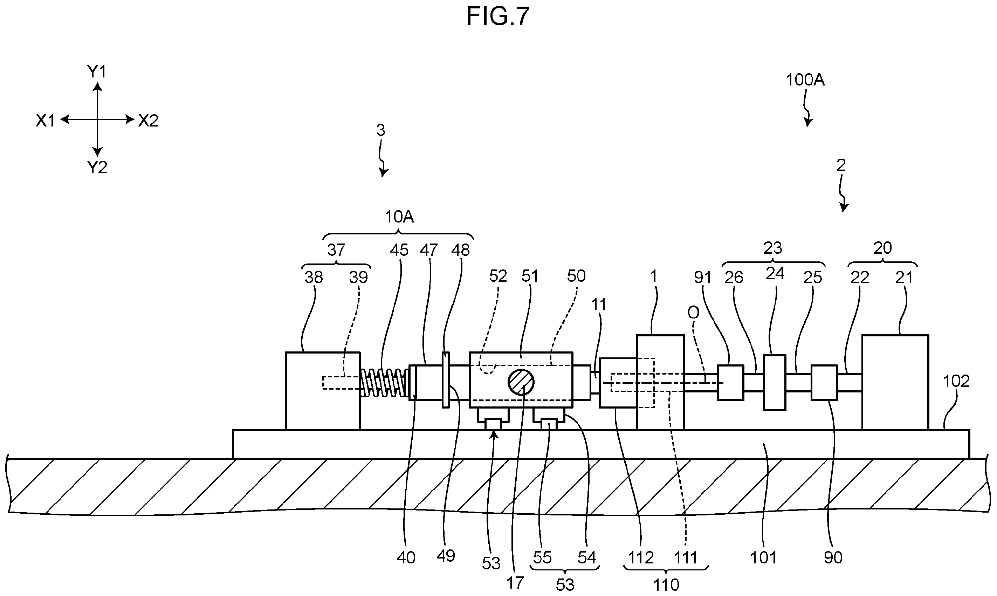

FIG. 7 is a schematic view of a reaction force generation mechanism, a movable component, a support, and an operation device when viewed from the first width direction in a ball screw device testing apparatus according to the second embodiment. As illustrated in FIG. 7, a ball screw device testing apparatus 100A of the second embodiment is different from that of the first embodiment in that a reaction force generation mechanism 10A does not include the axial motor 30, the first load-side ball screw device 33, and the linear guide 41. That is, the second embodiment is different from the first embodiment in that the main body of the biasing-portion support is fixed to the base 101. According to the second embodiment, the biasing force exerted by the first biasing portion 45 cannot be intentionally increased or decreased during the test.

The second embodiment is described above. In the above embodiment, the screw shaft 111 is a rotation component, and the nut 112 is a linear motion component, but in the present disclosure, as described in the following third embodiment, the nut 112 may be a rotation component, and the screw shaft 111 may be a linear motion component.

### (Third Embodiment)

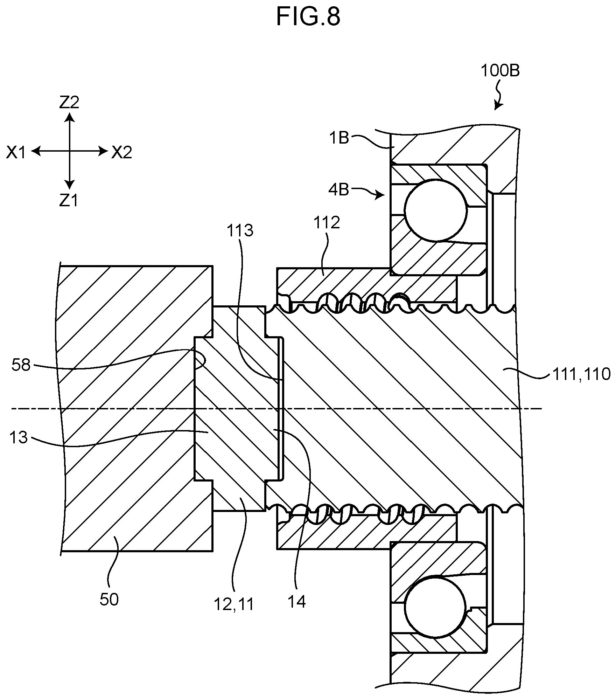

FIG. 8 is an enlarged schematic view of a jig device and the vicinity thereof of the ball screw device testing apparatus of the third embodiment when viewed in the horizontal direction. As illustrated in FIG. 8, a support 1B of a ball screw device testing apparatus 100B of the third embodiment is different from that of the first embodiment in that the screw shaft 111 is supported so as to be non-rotatable and movable in the axial direction, and the nut 112 is rotatably supported by a bearing 4B. An end surface of the screw shaft 111 in the first direction X1 has a recess 113 recessed in the second direction X2. The second fitting portion 14 of the coupling portion 11 is fitted into the recess 113. Even in such a third embodiment, the magnitude of the radial load acting on the screw shaft 111 during the test can be changed, as in other embodiments.

Although each embodiment is described above, the ball screw device to be tested in the ball screw device testing apparatus of the present disclosure may be a ball screw device other than the ball screw device mounted on an electric brake device, and the type, size, and the like of the ball screw device are not particularly limited. In the description of the usage method of the first embodiment, the state in which the pressing portion 48 and the movable component 50 are in contact with each other at the test start time is described, but in the present disclosure, the pressing portion 48 and the movable component 50 may not be in contact with each other at the test start time.

In addition, the housing 51 of the embodiment supports the movable component 50 on the inner peripheral surface of the through-hole 52, but in the present disclosure, a ball spline may be installed on the inner peripheral surface of the housing 51 to support the movable component 50 via the ball spline. According to this, the movement in the axial direction by the movable component 50 is smoothly performed.

In the embodiment, the reaction force generation mechanism 10 (pressing portion 48) and the movable component 50 are separable from each other, but may be coupled to each other. However, in the present disclosure, the movable component 50 is required to be able to move relative to the reaction force generation mechanism 10 in the width direction (orthogonal direction). Therefore, in a case where the reaction force generation mechanism 10 (pressing portion 48) and the movable component 50 are coupled, they are required to be coupled via a linear guide. According to this linear guide, the movable component 50 can move in the width direction. Furthermore, the movable component 50 can be prevented from being tilted (see the broken line Q in FIG. 3).

Further, in the embodiment, the movable component 50 is movably supported in the axial direction by the cylindrical housing 51, but, for example, the movable component 50 may be movably supported in the axial direction by a linear guide extending in the axial direction. As described above, in the present disclosure, the component that supports the movable component 50 is not particularly limited.

In the embodiment, the first biasing-portion support 37 is provided to support the first biasing portion 45, but in the present disclosure, only the first biasing portion 45 may be interposed between the nut 35 and the load cell 47. In this case, the first biasing portion 45 may be supported by a method in which the end of the first biasing portion 45 in the first direction X1 is fixed to the end of the nut 35 in the second direction X2. This eliminates the first biasing-portion support 37, and the number of components can be reduced. Similarly, also in the radial load mechanism 60, only the second biasing portion 75 may be interposed between the nut 66 and the housing 51. This eliminates the second biasing-portion support 68, and the number of components can be reduced.

In the present embodiment, the linear guide 53 is described as an example of the guide mechanism that movably supports the housing 51 in the orthogonal direction, but, in the present invention, a linear motion guide device having a ball, such as a ball slider in which a ball is interposed between the rail 54 and the slider 55, may be provided. Similarly, in the present invention, a linear motion guide device having a ball may be used, instead of the linear guides 41 and 72 that movably support the main body 38 and the main body 69.

Furthermore, in the present disclosure, air may be supplied from the base 101 toward the housing 51 (movable component 50). Alternatively, a magnet may be provided in the base 101 and the housing 51 (movable component 50) so that the base 101 and the housing 51 (movable component 50) repel each other by a magnetic force. According to such an example, the gravity of the housing 51 (movable component 50) is reduced, and the radial load of the radial load mechanism 60 is easily input to the housing 51 (movable component 50).

The present disclosure may be a combination of the following configurations.
(1) A ball screw device testing apparatus comprising:
   a support that rotatably supports a rotation component that is one of a screw shaft and a nut of a ball screw device and linearly movably supports a linear motion component that is the other of the screw shaft and the nut;
   a first motor that is configured to generate a torque for rotating the rotation component; and
   a load device that is configured to apply a load to the linear motion component, wherein
   a direction parallel to a center axis of the screw shaft is defined as an axial direction,
   one direction in the axial direction is defined as a first direction,
   the other direction in the axial direction is defined as a second direction,
   a direction orthogonal to the axial direction is defined as an orthogonal direction,
   the load device comprises
      a movable component that is disposed in the first direction with respect to the linear motion component and is movable in the axial direction and the orthogonal direction,
      a reaction force generation mechanism that is disposed in the first direction with respect to the movable component and configured to press the movable component from the first direction, and
      a radial load mechanism that is configured to move the movable component in the orthogonal direction,
   the movable component is movable relative to the reaction force generation mechanism in the orthogonal direction, and
   the movable component includes a coupling portion capable of transmitting a load in the second direction and the orthogonal direction to the linear motion component.
(2) The ball screw device testing apparatus according to (1), wherein
   the coupling portion is formed of a same material as the movable component and is formed integrally with the movable component.
(3) The ball screw device testing apparatus according to (1), wherein
   the coupling portion is a component separate from the movable component.
(4) The ball screw device testing apparatus according to any one of (1) to (3), wherein
   the coupling portion is fittable to the linear motion component.
(5) The ball screw device testing apparatus according to any one of (1) to (4), wherein
   the load device comprises
      a housing that has a through-hole penetrating the housing in the axial direction, into which the movable component is inserted, and movably supports the movable component in the axial direction, and
      a guide mechanism that movably supports the housing in the orthogonal direction, and
   the radial load mechanism contacts or is coupled to the housing in the orthogonal direction.
(6) The ball screw device testing apparatus according to (5), comprising
   at least two or more of the guide mechanisms, and the at least two or more of guide mechanisms are disposed apart from each other in the axial direction.
(7) The ball screw device testing apparatus according to any one of (1) to (6), wherein
   the movable component has a contact surface facing in the first direction,
   the reaction force generation mechanism has a facing surface facing in the second direction and contacting the contact surface, and
   one of the contact surface and the facing surface is provided with a plurality of rolling elements for reducing friction between the contact surface and the facing surface.
(8) The ball screw device testing apparatus according to any one of (1) to (7), wherein
   one direction in the orthogonal direction is defined as a first orthogonal direction,
   the other direction in the orthogonal direction is defined as a second orthogonal direction,
   the ball screw device testing apparatus comprises
      a biasing-portion support that is disposed in the second orthogonal direction with respect to the movable component and is movable in the orthogonal direction,
      a biasing portion that is disposed between the movable component and the biasing-portion support and exerts a biasing force in the orthogonal direction, and
      a movement device that is configured to move the biasing-portion support in the orthogonal direction, and
   when the biasing-portion support moves in the first orthogonal direction and a length of the biasing portion in the orthogonal direction is smaller than a natural length, the biasing portion exerts a biasing force for biasing the movable component in the first orthogonal direction.
(9) The ball screw device testing apparatus according to (8), wherein
   the movement device comprises
   a radial motor, and
   a radial side ball screw device configured to operate by a torque generated by the radial motor and move the biasing-portion support in the orthogonal direction.

### Reference Signs List

1, 1B SUPPORT
2 OPERATION DEVICE
3 LOAD DEVICE
10, 10A REACTION FORCE GENERATION MECHANISM
11 COUPLING PORTION
20 FIRST MOTOR
21, 24, 38, 69 MAIN BODY
23 TORQUE SENSOR
30 AXIAL MOTOR
33 FIRST LOAD-SIDE BALL SCREW DEVICE
37 FIRST BIASING-PORTION SUPPORT PORTION
40, 71 FLANGE
41, 53, 72 LINEAR GUIDE
45 FIRST BIASING PORTION
47 LOAD CELL
48 PRESSING PORTION
49 FACING SURFACE
50 MOVABLE COMPONENT
51 HOUSING
52 THROUGH HOLE
56 CONTACT SURFACE
60 RADIAL LOAD MECHANISM
61 RADIAL MOTOR
64 SECOND LOAD-SIDE BALL SCREW DEVICE
68 SECOND BIASING-PORTION SUPPORT (BIASING-PORTION SUPPORT)
75 SECOND BIASING PORTION
100, 100A, 100B BALL SCREW DEVICE TESTING APPARATUS
101 BASE
110 BALL SCREW DEVICE
111 SCREW SHAFT
112 NUT

## Claims

1. A ball screw device testing apparatus comprising:
a support that rotatably supports a rotation component that is one of a screw shaft and a nut of a ball screw device and linearly movably supports a linear motion component that is the other of the screw shaft and the nut;
a first motor that is configured to generate a torque for rotating the rotation component; and
a load device that is configured to apply a load to the linear motion component, wherein
a direction parallel to a center axis of the screw shaft is defined as an axial direction,
one direction in the axial direction is defined as a first direction,
the other direction in the axial direction is defined as a second direction,
a direction orthogonal to the axial direction is defined as an orthogonal direction,
the load device comprises
a movable component that is disposed in the first direction with respect to the linear motion component and is movable in the axial direction and the orthogonal direction,
a reaction force generation mechanism that is disposed in the first direction with respect to the movable component and configured to press the movable component from the first direction, and
a radial load mechanism that is configured to move the movable component in the orthogonal direction,
the movable component is movable relative to the reaction force generation mechanism in the orthogonal direction, and
the movable component includes a coupling portion capable of transmitting a load in the second direction and the orthogonal direction to the linear motion component.

2. The ball screw device testing apparatus according to claim 1, wherein
the coupling portion is formed of a same material as the movable component and is formed integrally with the movable component.

3. The ball screw device testing apparatus according to claim 1, wherein
the coupling portion is a component separate from the movable component.

4. The ball screw device testing apparatus according to any one of claims 1 to 3, wherein
the coupling portion is fittable to the linear motion component.

5. The ball screw device testing apparatus according to any one of claims 1 to 4, wherein
the load device comprises
a housing that has a through-hole penetrating the housing in the axial direction, into which the movable component is inserted, and movably supports the movable component in the axial direction, and
a guide mechanism that movably supports the housing in the orthogonal direction, and
the radial load mechanism contacts or is coupled to the housing in the orthogonal direction.

6. The ball screw device testing apparatus according to claim 5, comprising
at least two or more of the guide mechanisms, and
the at least two or more of guide mechanisms are disposed apart from each other in the axial direction.

7. The ball screw device testing apparatus according to any one of claims 1 to 6, wherein
the movable component has a contact surface facing in the first direction,
the reaction force generation mechanism has a facing surface facing in the second direction and contacting the contact surface, and
one of the contact surface and the facing surface is provided with a plurality of rolling elements for reducing friction between the contact surface and the facing surface.

8. The ball screw device testing apparatus according to any one of claims 1 to 7, wherein
one direction in the orthogonal direction is defined as a first orthogonal direction,
the other direction in the orthogonal direction is defined as a second orthogonal direction,
the ball screw device testing apparatus comprises
a biasing-portion support that is disposed in the second orthogonal direction with respect to the movable component and is movable in the orthogonal direction,
a biasing portion that is disposed between the movable component and the biasing-portion support and exerts a biasing force in the orthogonal direction, and
a movement device that is configured to move the biasing-portion support in the orthogonal direction, and
when the biasing-portion support moves in the first orthogonal direction and a length of the biasing portion in the orthogonal direction is smaller than a natural length, the biasing portion exerts a biasing force for biasing the movable component in the first orthogonal direction.

9. The ball screw device testing apparatus according to claim 8, wherein
the movement device comprises
a radial motor, and
a radial side ball screw device configured to operate by a torque generated by the radial motor and move the biasing-portion support in the orthogonal direction.
